(19) Europäisches Patentamt
European Patent Office
Office européen des brevets

(11) Veröffentlichungsnummer: **0 442 316 B1**

(12) **EUROPÄISCHE PATENTSCHRIFT**

(45) Veröffentlichungstag der Patentschrift: **28.12.94**

(51) Int. Cl.[5]: **C08F 297/08**

(21) Anmeldenummer: **91101110.4**

(22) Anmeldetag: **29.01.91**

(54) **Copolymerisate des Propylens.**

(30) Priorität: **10.02.90 DE 4004087**

(43) Veröffentlichungstag der Anmeldung:
**21.08.91 Patentblatt 91/34**

(45) Bekanntmachung des Hinweises auf die Patenterteilung:
**28.12.94 Patentblatt 94/52**

(84) Benannte Vertragsstaaten:
**AT BE DE ES FR GB IT NL**

(56) Entgegenhaltungen:
**EP-A- 0 383 099**
**EP-A- 0 438 068**
**FR-A- 1 386 838**

(73) Patentinhaber: **BASF Aktiengesellschaft**
**Carl-Bosch-Strasse 38**
**D-67063 Ludwigshafen (DE)**

(72) Erfinder: **Schwager, Harald, Dr.**
**Ziegelofenweg 7**
**W-6720 Speyer (DE)**
Erfinder: **Kerth, Jürgen, Dr.**
**Wattenheimer Strasse 15**
**W-6719 Carlsberg (DE)**

**EP 0 442 316 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Copolymerisate des Propylens mit Alk-1-enen, erhältlich durch zweistufige Polymerisation aus der Gasphase heraus in einem bewegten Festbett, mittels eines Ziegler-Natta-Katalysatorsystems, das neben einer titanhaltigen Feststoffkomponente noch eine Aluminiumverbindung enthält, wobei man

a) in der ersten Polymerisationsstufe bei einem Druck von 15 bis 40 bar, einer Temperatur von 50 bis 90 °C und einer mittleren Verweilzeit des Reaktionsgemisches von 1 bis 5 Stunden, Propylen zusammen mit einem weiteren Alk-1-en polymerisiert, dabei pro mmol der Aluminiumverbindung 0,05 bis 2 kg Propylen-Copolymerisat erzeugt und das Verhältnis zwischen dem Partialdruck des Propylens und dem des weiteren Alk-1-ens auf 5:1 bis 500:1 einstellt und anschließend

b) in einer zweiten Polymerisationsstufe bei einem Druck von 5 bis 30 bar, wobei dieser Druck wenigstens 7 bar unter dem Druck der ersten Polymerisationsstufe liegt, einer Temperatur von 30 bis 100 °C und einer mittleren Verweilzeit des Reaktionsgemisches von 1 bis 5 Stunden, dem aus der ersten Polymerisationsstufe ausgebrachten Polymerisat Propylen und weiteres Alk-1-en hinzupolymerisiert, dabei das Verhältnis der Partialdrücke zwischen Propylen und dem des weiteren Alk-1-ens auf 0,5:1 bis 20:1 einstellt und das Gewichtsverhältnis zwischen den in der ersten und den in der zweiten Polymerisationsstufe umgesetzten Monomeren so bemißt, daß es im Bereich von 0,5:1 bis 20:1 liegt.

Außerdem betrifft die Erfindung ein Verfahren zur Herstellung dieser Copolymerisate sowie Folien und Formkörper aus diesen Copolymerisaten.

Durch Polymerisation an Ziegler-Natta-Katalysatoren erhältliche Propylen-Ethylen-Copolymerisate sind bereits in einer Reihe von Patentschriften beschrieben worden. Aus der US-A 4 260 710 ist bekannt, Homo- und Copolymerisate von $\alpha$-Olefinen durch Polymerisation mit Hilfe von Ziegler-Natta-Katalysatoren in einem Rührkessel herzustellen. Die dabei verwendeten Katalysatorkomponenten enthalten u.a. Verbindungen des mehrwertigen Titans, Aluminiumhalogenide und/oder -alkyle, sowie Elektronendonorverbindungen, wobei meistens Silane, Ester, Ether, Ketone oder Lactone verwendet werden (EP-B 14 523, EP-B 45 977, EP-B 86 473, EP-A 171 200).

Desweiteren sind eine Reihe von Verfahren zur Darstellung von Propylen-Ethylen-Blockcopolymeren mit Hilfe eines Ziegler-Natta-Katalysatorsystems bekannt (US-A 4 454 299, US-A 4 455 405, ZA-B 0084/3561, ZA-B 0084/3563, ZA-B 0084/5261, GB-B 1 032 945, ältere Anmeldung DE-38 27 565.1), bei denen man zunächst gasförmiges Propylen in einer ersten Reaktionszone polymerisiert und das daraus erhältliche Homopolymerisat anschließend in eine zweite Reaktionszone bringt, wo ein Gemisch aus Ethylen und Propylen hinzupolymerisiert wird. Das Verfahren wird gewöhnlich bei erhöhtem Druck und in Anwesenheit von Wasserstoff als Molmassenregler durchgeführt. Die dabei erhältlichen Copolymerisate weisen meist eine ausgezeichnete Schlagzähigkeit, zugleich aber eine relativ hohe Neigung zum Weißbruch auf. Unter Weißbruch versteht man dabei die an vielen Kunststoffen während der Verstreckung auftretende Weißfärbung der vorher transparenten Probe in einzelnen Bereichen.

Ein weiterer Nachteil der bisher bekannten zweistufigen Polymerisationsverfahren liegt darin, daß die am Polymerisat der ersten Polymerisationsstufe gemessene Schüttdichte nach der zweiten Polymerisationsstufe oft abnimmt. Aus verfahrenstechnischen Gründen ist eine zu starke Abnahme der Schüttdichte eines Polymerisats unerwünscht, da in diesem Fall das Austragen des Reaktorinhalts aus der zweiten Polymerisationsstufe erschwert wird.

Der vorliegenden Erfindung lag daher die Aufgabe zugrunde, den geschilderten Nachteilen abzuhelfen, und Copolymerisate des Propylens mit verbesserten anwendungstechnischen Eigenschaften zu entwickeln.

Demgemäß wurden die eingangs definierten neuen Propylen-Copolymerisate gefunden.

Das zu diesen Copolymerisaten führende Verfahren kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man meistens eine Reihe von mehreren hintereinander geschalteten Rührkesseln einsetzt. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren durchgeführt werden. Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen

feinteiligen Träger, wofür sich Silicium- und Aluminiumoxide, sowie Aluminiumsilicate gut bewährt haben. Als besonders bevorzugter Träger wird $SiO_2 \cdot aAl_2O_3$ verwendet, wobei a für einen Wert von 0 bis 2, insbesondere von 0 bis 0,5 steht.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-($C_1$-$C_{10}$-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I

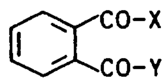

I

verwendet, wobei X und Y jeweils für Chlor oder einen $C_1$- bis $C_{10}$-Alkoxyrest oder gemeinsam für Sauerstoff stehen. Besonders bevorzugte Elektronendonorverbindungen sind Phthalsäureester, wobei X und Y $C_1$-$C_8$-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren.Als Hydroxyverbindungen werden bei diesen Estern die bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alkylgruppen tragen können, ferner $C_6$- bis $C_{10}$-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200 und der GB-A 2 111 066 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt $SiO_2 \cdot aAl_2O_3$ - wobei a für eine Zahl im Bereich von 0 bis 2, insbesondere im Bereich von 0 bis 0,5 steht - der in der Regel einen Teilchendurchmesser von 0,1 bis 1000 $\mu$m, insbesondere von 10 bis 300 $\mu$m, ein Porenvolumen von 0,1 bis 10 $cm^3/g$, insbesondere von 1,0 bis 4,0 $cm^3/g$, und eine spezifische Oberfläche von 10 bis 1000 $m^2/g$, insbesondere von 100 bis 500 $m^2/g$, aufweist, mit einer Lösung der magnesiumhaltigen Verbindung in einem flüssigen Alkan, wonach man dieses Gemisch 0,5 bis 5 Stunden lang bei einer Temperatur zwischen 10 und 120 °C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein $C_1$- bis $C_8$-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel I hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150 °C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150 °C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt

solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysatoren kommen dabei Aluminiumverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel II

$$R^1{}_nSi(OR^2)_{4-n} \qquad II$$

wobei $R^1$ eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe bedeutet, $R^2$ eine $C_1$- bis $C_{20}$-Alkylgruppe bezeichnet und n für die Zahlen 1, 2 oder 3 steht. Besonders bevorzugt werden dabei solche Verbindungen, in denen $R^1$ eine $C_1$- bis $C_8$-Alkylgruppe oder eine 5- bis 7-gliedrige Cycloalkylgruppe, $R^2$ eine $C_1$- bis $C_4$-Alkylgruppe und n die Zahlen 1 oder 2 bedeutet.

Unter diesen Verbindungen sind Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Die Polymerisation wird in der ersten Polymerisationsstufe bei einem Druck von 15 und 40 bar, einer Temperatur von 50 bis 90 °C und einer mittleren Verweilzeit des Reaktionsgemisches von 1 bis 5 Stunden durchgeführt. Bevorzugt sind dabei Drücke von 20 bis 35 bar, Temperaturen von 65 bis 85 °C und mittlere Verweilzeiten von 1,5 bis 4 Stunden. Man wählt die Reaktionsbedingungen so, daß in der ersten Polymerisationzone pro mmol der Aluminiumkomponente 0,05 bis 2 kg, bevorzugt 0,1 bis 1,5 kg, eines Propylen-Copolymerisats gebildet werden. Als Comonomer wird dabei ein Alk-1-en verwendet, beispielsweise Ethylen, But-1-en, Pent-1-en, Hex-1-en, Hept-1-en oder Oct-1-en oder ein Gemisch aus mehreren Alk-1-enen. Bevorzugte Comonomere sind Ethylen und But-1-en. Erfindungsgemäß wird in der ersten Polymerisationszone das Verhältnis zwischen dem Partialdruck des Propylens und dem des Alk-1-ens auf 5:1 bis 500:1, insbesondere auf 10:1 bis 200:1, eingestellt. Wird in der ersten Polymerisationsstufe ein Comonomerengemisch aus Propylen, Ethylen und einem $C_4$-$C_{10}$-Alk-1-en verwendet, so sollte das Verhältnis der Partialdrücke zwischen Ethylen und dem $C_4$-$C_{10}$-Alk-1-en auf 20:1 bis 1:10, insbesondere auf 10:1 bis 1:5 eingestellt werden.

Das hierbei erhältliche Propylen-Copolymerisat wird nach Beendigung der Reaktion zusammen mit dem Katalysator aus der ersten Polymerisationsstufe ausgetragen und in die zweite Polymerisationsstufe eingeführt, wo diesem ein Gemisch von Propylen und weiteren Alk-1-enen hinzupolymerisiert wird.

Darunter werden neben Ethylen und But-1-en insbesondere noch Pent-1-en, Hex-1-en, Hept-1-en und Oct-1-en verstanden, wobei Ethylen und But-1-en bevorzugt verwendet werden. Dabei kann das Propylen sowohl mit einem Alk-1-en als auch mit einem Gemisch aus Ethylen und einem $C_4$-$C_{10}$-Alk-1-en dem aus der ersten Polymerisationsstufe ausgebrachten Copolymerisat hinzupolymerisiert werden. Vorzugsweise wird in der zweiten Polymerisationsstufe entweder ein Gemisch aus Propylen und Ethylen oder ein Gemisch aus Propylen, Ethylen und But-1-en umgesetzt. Die Menge der jeweils eingesetzten Monomere ist dabei so zu bemessen, daß das Verhältnis der Partialdrücke zwischen Propylen und den weiteren Alk-1-enen im Bereich von 0,5:1 bis 20:1, insbesondere im Bereich von 0,5:1 bis 10:1, liegt. Für den Fall, daß in der zweiten Polymerisationsstufe ein Gemisch aus Propylen, Ethylen und einem $C_4$-$C_{10}$-Alk-1-en copolymerisiert wird, ist ferner dafür zu sorgen, daß das Verhältnis der Partialdrücke zwischen Ethylen und dem $C_4$-$C_{10}$-Alk-1-en auf 2:1 bis 100:1, insbesondere auf 5:1 bis 50:1 eingestellt wird. Durch geeignete Wahl der Reaktionsparameter sollte außerdem darauf geachtet werden, daß das Gewichtsverhältnis zwischen den in

der ersten und den in der zweiten Polymerisationsstufe umgesetzten Monomeren im Bereich von 0,5:1 bis 20:1, insbesondere im Bereich von 0,6:1 bis 10:1, liegt. Die Polymerisation erfolgt in der zweiten Polymerisationsstufe bei einem Druck von 5 bis 30 bar, einer Temperatur von 30 bis 100 °C und einer mittleren Verweilzeit des Reaktionsgemisches von 1 bis 5 Stunden. Bevorzugt sind dabei Drücke von 10 bis 25 bar, Temperaturen von 40 bis 90 °C und mittlere Verweilzeiten von 1,5 bis 4 Stunden. Wählt man für die zweite Polymerisationsstufe Temperaturen von 70 bis 90 °C, insbesondere von 70 bis 85 °C, so erhält man Propylen-Copolymerisate, die sich insbesondere durch eine deutlich verringerte Neigung zum Weißbruch auszeichnen.

Weiterhin kann es sich empfehlen, dem Reaktionsgemisch der zweiten Polymerisationsstufe ein $C_1$- bis $C_8$-Alkanol, insbesondere ein $C_1$-$C_4$-Alkanol, hinzufügen, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol. Die Menge des $C_1$-$C_8$-Alkanols wird dabei zweckmäßigerweise so bemessen, daß das Molverhältnis zwischen dem $C_1$-$C_8$-Alkanol und der als Cokatalysator dienenden Aluminiumverbindung 0,01:1 bis 10:1, insbesondere 0,02:1 bis 5:1, beträgt.

Das Molekulargewicht der dabei erhältlichen Polymerisate kann wie üblich durch Zugabe von Reglern, insbesondere von Wasserstoff kontrolliert werden. Weiterhin ist es möglich, Inertgase wie Stickstoff oder Argon mitzuverwenden.

Die mittleren Molmassen der erfindungsgemäßen Copolymerisate liegen zwischen 10 000 bis 500 000, die Schmelzflußindices zwischen 0,1 bis 100 g/10 min, vorzugsweise zwischen 0,2 bis 10 g/10 min, jeweils gemessen nach DIN 53 735 bei 230 °C und 2, 16 kg. Der Schmelzflußindex entspricht dabei der Menge an Polymerisat, die innerhalb von 10 Minuten aus der nach DIN 53 735 genormten Prüfvorrichtung bei einer Temperatur von 230 °C und unter einem Gewicht von 2,16 kg ausgepreßt wird. Die erhaltenen Copolymerisate weisen neben einer guten Kerbschlagzähigkeit nur geringe Katalysatorrückstände und eine sehr niedrige Neigung zum Weißbruch auf. Aus verfahrenstechnischer Sicht ist es außerdem vorteilhaft, daß die Schüttdichten der aus der zweiten Polymerisationsstufe ausgetragenen Copolymerisate nicht niedriger sind wie die aus der ersten Polymerisationsstufe erhaltenen Copolymerisate.

Aufgrund ihrer guten mechanischen Eigenschaften, insbesondere ihrer geringen Neigung zum Weißbruch eignen sich die erfindungsgemäßen Copolymerisate u.a. zur Herstellung von Folien, Rohren, Belägen, Fasern, Hohlkörpern, Spritzgußartikeln und von Formteilen für den Fahrzeugbau.

Beispiele 1 bis 14

Das Verfahren wurde in allen Beispielen in zwei hintereinander geschalteten Rührautoklaven mit einem Nutzvolumen von jeweils 180 l in Anwesenheit von Wasserstoff als Molekulargewichtsregler durchgeführt. Beide Reaktoren enthielten ein bewegtes Festbett aus feinteiligem Polypropylen.

In den ersten Polymerisationsreaktor wurden die jeweiligen Comonomere gasförmig eingeleitet und bei einer mittleren Verweilzeit von 2,5 Stunden mit Hilfe eines Ziegler-Natta-Katalysators polymerisiert. Die genauen Versuchsbedingungen, das Verhältnis der Partialdrücke der Comonomere, sowie das Gewichtsverhältnis zwischen den in der ersten und den in der zweiten Polymerisationsstufe umgesetzten Monomeren sind für alle Beispiele in der Tabelle 1 wiedergegeben.

In allen Beispielen erfolgte die Polymerisation kontinuierlich mit Hilfe eines Ziegler-Natta-Katalysators, wobei pro Stunde 1 g einer titanhaltigen Feststoffkomponente, 60 mmol Triethylaluminium und 6 mmol Dimethoxyisobutylisopropylsilan als Katalysatorbestandteile verwendet wurden. Dabei wurden pro mmol der Aluminiumverbindung in der ersten Polymerisationszone 0,4 kg Propylen-Copolymerisat erzeugt.

Das im ersten Reaktor gebildete Propylen-Copolymerisat wurde anschließend zusammen mit dem Katalysator in den zweiten Rührautoklaven übergeführt und dort bei einer Verweilzeit von 2,5 Stunden dem Copolymerisat ein Gemisch von Propylen und weiteren Alk-1-enen hinzupolymerisiert. Dem Reaktionsgemisch wurden pro mmol der Aluminiumverbindung 0,05 bis 1,3 mmol Isopropanol hinzugefügt. Die genauen Versuchsbedingungen und das Verhältnis der Partialdrücke zwischen den einzelnen Comonomeren sind für alle Beispiele in der Tabelle 2 wiedergegeben.

Die titanhaltige Feststoffkomponente wurde nach folgendem Verfahren hergestellt.

Dazu versetzte man in einer ersten Stufe $SiO_2$, welches einen Teilchendurchmesser von 20 bis 45 µm, ein Porenvolumen von 1,75 $cm^3$/g und eine Oberfläche von 320 $m^2$/g aufwies, mit in n-Heptan gelöstem Butyl-octylmagnesium, wobei pro Mol $SiO_2$ • 0,3 mol der Magnesiumverbindung eingesetzt wurden. Die Lösung wurde 1,5 Stunden lang bei 90 °C gerührt, danach auf 20 °C abgekühlt, und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurde unter ständigem Rühren 3 mol Ethanol, bezogen auf 1 mol Magnesium, hinzugefügt. Dieses Gemisch wurde 1,5 Stunden bei 80 °C gerührt und danach mit 6 mol Titantetrachlorid und 0,5 mol Phthalsäuredin-butylester, jeweils bezogen auf 1 mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahierte man zwei Stunden lang bei 125 °C mit einer 15 gewichtsprozentigen Lösung von Titantetrachlorid in Ethylbenzol. Danach wurde das Festprodukt durch Filtration vom Extraktionsmittel getrennt und solange mit n-Heptan gewaschen, bis dieses nur mehr 0,3 Gew.-% Titantetrachlorid enthielt.

Die daraus resultierende titanhaltige Feststoffkomponente enthielt 3,1 Gew.-% Titan, 7,5 Gew.-% Magnesium und 28,3 Gew.-% Chlor.

Die Eigenschaften der mit Hilfe dieses Ziegler-Natta-Katalysatorsystems erhaltenen Propylen-Copolymerisate sind für alle Versuche in der nachstehenden Tabelle 3 wiedergegeben. Dabei werden der Schmelzindex und die Schüttdichte sowohl für die aus der ersten, als auch für die aus der zweiten Polymerisationszone ausgebrachten Copolymerisate aufgeführt. Die Tabelle enthält ferner für alle Beispiele die jeweiligen Werte für die Kerbschlagzähigkeit, die Steifigkeit (Schubmodul), den Weißbruch und die Gehalte an Katalysatorrückständen (Titan und Chlor).

Bestimmung des Weißbruchs:

Der Weißbruch wurde mit Hilfe einer Fallbolzenapparatur nach DIN 53 443 Teil 1 ermittelt, wobei ein Fallbolzen mit einer Masse von 250 g, einem Stoßkörper mit 5 mm Durchmesser und einem Kalottenradius von 25 mm verwendet wurde. Die Fallhöhe betrug 50 cm.

Als Probekörper wurde eine spritzgegossene Rundscheibe mit einem Durchmesser von 60 mm und einer Dicke von 2 mm verwendet. Der Probekörper wurde bei einer Massetemperatur von 250 °C und einer Werkzeugoberflächentemperatur von 30 °C spritzgegossen.

Die Prüfung erfolgte bei einer Temperatur von 23 °C, wobei jeder Probekörper nur jeweils einem Stoßversuch unterworfen wurde. Dabei wurde zunächst der Probekörper auf einen Auflagering gelegt, ohne daß dieser eingespannt wurde, und anschließend wurde der Fallbolzen ausgelöst. Zur Mittelwertbildung wurden jeweils 5 Probekörper geprüft.

Der Durchmesser der sichtbaren Weißbruchmarkierung ist in mm angegeben und wurde dadurch ermittelt, daß man diesen auf der dem Stoß abgewandten Seite der Rundscheibe in Fließrichtung und senkrecht dazu maß und aus beiden Werten den Mittelwert bestimmte.

Tabelle 1

Reaktionsbedingungen in der ersten Polymerisationsstufe

| Beispiele | Temperatur [°C] | Druck [bar] | verwendetes Alk-1-en | Verhältnis Partialdrücke Propylen: Alk-1-en | Verhältnis Partialdrücke Ethylen: $C_4$-$C_{10}$-Alk-1-en | Gewichts-Verhältnis des Umsatzes in der 1. Polymerisationsstufe zum Umsatz in der 2. Polymerisationsstufe |
|---|---|---|---|---|---|---|
| 1 | 70 | 28 | Ethylen | 50:1 | | 4:1 |
| 2 | 70 | 28 | But-1-en | 33:1 | | 4:1 |
| 3 | 80 | 32 | But-1-en | 20:1 | | 5:1 |
| 4 | 80 | 32 | But-1-en | 20:1 | | 7,7:1 |
| 5 | 70 | 28 | But-1-en | 25:1 | | 1,8:1 |
| 6 | 70 | 28 | Ethylen | 50:1 | | 1,8:1 |
| 7 | 80 | 23 | Ethylen | 32:1 | | 8:1 |
| 8 | 80 | 25 | Ethylen | 26,5:1 | | 8:1 |
| 9 | 80 | 25 | Ethylen | 35:1 | | 4,5:1 |
| 10 | 80 | 25 | Ethylen | 24,5:1 | | 4,5:1 |
| 11 | 80 | 25 | Ethylen | 26:1 | | 2:1 |
| 12 | 80 | 25 | Ethylen | 20:1 | | 2:1 |
| 13 | 70 | 23 | Ethylen, But-1-en | 16,4:1 | 1,2:1 | 8:1 |
| 14 | 70 | 20 | Ethylen, But-1-en | 10,4:1 | 1:1,7 | 8:1 |

Tabelle 2

Reaktionsbedingungen in der zweiten Polymerisationsstufe

| Beispiele | Temperatur [°C] | Druck [bar] | verwendetes Alk-1-en | Verhältnis der Partialdrücke Propylen: Alk-1-en | Verhältnis der Partialdrücke zwischen Ethylen und dem $C_4$-$C_{10}$-Alk-1-en | Verhältnis mmol Isopropanol : mmol Aluminiumkomponente |
|---|---|---|---|---|---|---|
| 1 | 60 | 11 | Ethylen | 2,3:1 | - | 1 |
| 2 | 50 | 11 | Ethylen, But-1-en | 2,1:1 | 14,7:1 | 1 |
| 3 | 60 | 15 | Ethylen, But-1-en | 2,1:1 | 9:1 | 1,2 |
| 4 | 60 | 15 | Ethylen, But-1-en | 1,5:1 | 12:1 | 1,3 |
| 5 | 50 | 11 | Ethylen, But-1-en | 2,1:1 | 12,6:1 | 0,05 |
| 6 | 50 | 11 | Ethylen | 2,3:1 | - | 0,05 |
| 7 | 70 | 15 | Ethylen | 1,9:1 | - | 1,3 |
| 8 | 70 | 15 | Ethylen | 1,9:1 | - | 1,25 |
| 9 | 70 | 15 | Ethylen | 2,3:1 | - | 1,08 |
| 10 | 70 | 15 | Ethylen | 2,3:1 | - | 1,0 |
| 11 | 70 | 15 | Ethylen | 2,3:1 | - | <0,2 |
| 12 | 70 | 15 | Ethylen | 2,3:1 | - | <0,2 |
| 13 | 70 | 15 | Ethylen | 1,9:1 | - | 1,2 |
| 14 | 70 | 13 | Ethylen | 1,9:1 | - | <1,0 |

Tabelle 3

Eigenschaften der erhaltenen Copolymerisate

| Bsp. | nach der ersten Polymerisationsstufe Schmelzindex[a)] [g/10 min] | nach der ersten Polymerisationsstufe Schüttdichte[b)] [g/l] | nach der zweiten Polymerisationsstufe Schmelzindex[a)] [g/10 min] | nach der zweiten Polymerisationsstufe Schüttdichte[b)] [g/l] | Weißbruch[c)] [mm] | Kerbschlag-[d)] zähigkeit [kJ/m²] | Steifigkeit[e] (Schubmodul) [N/mm²] | Rückstände im Polymerisat Chlor [ppm] | Rückstände im Polymerisat Titan [ppm] |
|---|---|---|---|---|---|---|---|---|---|
| 1 | 5,2 | 405 | 2,7 | 430 | 13,5 | 5,8 | 510 | < 13 | < 2 |
| 2 | 4,6 | 410 | 2,3 | 450 | 14,0 | 5,9 | 505 | < 13 | < 2 |
| 3 | 4,5 | 395 | 2,2 | 430 | 13,0 | 6,0 | 505 | < 13 | < 2 |
| 4 | 5,3 | 405 | 3,5 | 430 | 13,5 | 4,0 | 630 | < 13 | < 2 |
| 5 | 4,5 | 390 | 2,8 | 440 | 10,5 | 100 % angebrochen | 320 | < 10 | < 2 |
| 6 | 4,5 | 395 | 2,8 | 435 | 11,0 | 100 % angebrochen | 310 | < 10 | < 2 |

a) nach DIN 53 735, bei 230°C und 2,16 kg
b) nach DIN 53 466
c) bei 23°C,
d) nach DIN 53 453 bei -20°C
e) nach DIN 53 445

Tabelle 3 - Fortsetzung

Eigenschaften der erhaltenen Copolymerisate

| Bsp. | nach der zweiten Polymerisationsstufe Schmelzindex[a] [g/10 min] | Schüttdichte[b] [g/l] | Weißbruch[c] [mm] | Schmelzpunkt[d] [°C] | Rückstände im Polymerisat-Chlor [ppm] |
|---|---|---|---|---|---|
| 7 | 3,0 | 414 | 10 | 148 | <12 |
| 8 | 3,5 | 385 | 6 | 140 | < 9 |
| 9 | 2,5 | 414 | 10 | 148 | <12 |
| 10 | 2,8 | 382 | 5 | 140 | < 9 |
| 11 | 1,3 | 390 | 0 | 146 | < 6 |
| 12 | 1,0 | 367 | 0 | 137 | < 6 |
| 13 | 3,5 | 380 | 0 | 130 | <12 |
| 14 | <1,0 | 350 | 0 | 120 | <12 |

a) nach DIN 53 735, bei 230°C und 2,16 kg
b) nach DIN 53 466
c) bei 23°C,
d) bestimmt durch Diferential Scanning Calorimetry

**Patentansprüche**
**Patentansprüche für folgende Vertragsstaaten : AT, BE, DE, FR, GB, IT, NL**

1. Copolymerisate des Propylens mit Alk-1-enen, erhältlich durch zweistufige Polymerisation aus der Gasphase heraus in einem bewegten Festbett, mittels eines Ziegler-Natta-Katalysatorsystems, das neben einer titanhaltigen Feststoffkomponente noch eine Aluminiumverbindung enthält, wobei man
   a) in der ersten Polymerisationsstufe bei einem Druck von 15 bis 40 bar, einer Temperatur von 50 bis 90 °C und einer mittleren Verweilzeit des Reaktionsgemisches von 1 bis 5 Stunden, Propylen zusammen mit einem weiteren Alk-1-en polymerisiert, dabei pro mmol der Aluminiumverbindung 0,05 bis 2 kg Propylen-Copolymerisat erzeugt und das Verhältnis zwischen dem Partialdruck des Propylens und dem des weiteren Alk-1-ens auf 5:1 bis 500:1 einstellt und anschließend
   b) in einer zweiten Polymerisationsstufe bei einem Druck von 5 bis 30 bar, wobei dieser Druck wenigstens 7 bar unter dem Druck der ersten Polymerisationsstufe liegt, einer Temperatur von 30 bis 100 °C und einer mittleren Verweilzeit des Reaktionsgemisches von 1 bis 5 Stunden, dem aus der ersten Polymerisationsstufe ausgebrachten Polymerisat Propylen und weiteres Alk-1-en hinzupolymerisiert, dabei das Verhältnis der Partialdrücke zwischen Propylen und dem des weiteren Alk-1-ens auf 0,5:1 bis 20:1 einstellt und das Gewichtsverhältnis zwischen den in der ersten und den in der zweiten Polymerisationsstufe umgesetzten Monomeren so bemißt, daß es im Bereich von 0,5:1 bis 20:1 liegt.

2. Copolymerisate nach Anspruch 1, erhältlich nach einem Verfahren, wobei man in der zweiten Polymerisationsstufe als Alk-1-en Ethylen verwendet.

3. Copolymerisate nach Anspruch 1, erhältlich nach einem Verfahren, wobei man in der zweiten Polymerisationsstufe als Alk-1-en ein Gemisch aus Ethylen und einem $C_4$-$C_{10}$-Alk-1-en verwendet.

4. Copolymerisate nach den Ansprüchen 1 bis 3, erhältlich nach einem Verfahren, wobei man die Polymerisation in der zweiten Polymerisationsstufe in Gegenwart eines $C_1$-$C_8$-Alkanols vornimmt.

5. Copolymerisate nach den Ansprüchen 1 bis 4, erhältlich nach einem Verfahren, wobei man die Polymerisation in der zweiten Polymerisationsstufe bei einer Temperatur von 70 bis 90 °C durchführt.

6. Verfahren zur Herstellung von Copolymerisaten des Propylens mit Alk-1-enen gemäß den Ansprüchen 1 bis 5, wobei man aus der Gasphase heraus in einem bewegten Festbett mittels eines Ziegler-Natta-Katalysatorsystems,das neben einer titanhaltigen Feststoffkomponente noch eine Aluminiumverbindung enthält, zunächst in einer ersten Polymerisationsstufe bei einem Druck von 15 bis 40 bar, einer Temperatur von 50 bis 90 °C und einer mittleren Verweilzeit des Reaktionsgemisches von 1 bis 5 Stunden, pro mmol der Aluminiumverbindung 0,05 bis 2 kg eines Propylen-Copolymerisats erzeugt, und in einer zweiten Polymerisationsstufe bei einem Druck von 5 bis 30 bar, wobei dieser Druck wenigstens 7 bar unter dem Druck der ersten Polymerisationsstufe liegt, einer Temperatur von 30 bis 100 °C und einer mittleren Verweilzeit des Reaktionsgemisches von 1 bis 5 Stunden, dem aus der ersten Polymerisationsstufe ausgebrachten Polymerisat weiteres Alk-1-en hinzupolymerisiert, dadurch gekennzeichnet, daß man in der ersten Polymerisationsstufe Propylen zusammen mit einem weiteren Alk-1-en polymerisiert, dabei das Verhältnis zwischen dem Partialdruck des Propylens und dem des weiteren Alk-1-ens auf 5:1 bis 500:1 einstellt, in der zweiten Polymerisationsstufe dem aus der ersten Polymerisationsstufe ausgebrachten Gemisch Propylen und weiteres Alk-1-en hinzupolymerisiert, dabei das Verhältnis der Partialdrücke zwischen Propylen und dem des weiteren Alk-1-ens auf 0,5:1 bis 20:1 einstellt und das Gewichtsverhältnis zwischen den in der ersten und den in der zweiten Polymerisationsstufe umgesetzten Monomeren so bemißt, daß es im Bereich von 0,5:1 bis 20:1 liegt.

7. Folien und Formkörper aus den Copolymerisaten gemäß den Ansprüchen 1-5.

**Patentansprüche für folgenden Vertragsstaat : ES**

1. Verfahren zur Herstellung von Copolymerisaten des Propylens mit Alk-1-enen, wobei man aus der Gasphase heraus in einem bewegten Festbett mittels eines Ziegler-Natta-Katalysatorsystems, das neben einer titanhaltigen Feststoffkomponente noch eine Aluminiumverbindung enthält, zunächst in einer ersten Polymerisationsstufe bei einem Druck von 15 bis 40 bar, einer Temperatur von 50 bis

90 °C und einer mittleren Verweilzeit des Reaktionsgemisches von 1 bis 5 Stunden, pro mmol der Aluminiumverbindung 0,05 bis 2 kg eines Propylen-Copolymerisats erzeugt, und in einer zweiten Polymerisationsstufe bei einem Druck von 5 bis 30 bar, wobei dieser Druck wenigstens 7 bar unter dem Druck der ersten Polymerisationsstufe liegt, einer Temperatur von 30 bis 100 °C und einer mittleren Verweilzeit des Reaktionsgemisches von 1 bis 5 Stunden, dem aus der ersten Polymerisationsstufe ausgebrachten Polymerisat weiteres Alk-1-en hinzupolymerisiert, dadurch gekennzeichnet, daß man in der ersten Polymerisationsstufe Propylen zusammen mit einem weiteren Alk-1-en polymerisiert, dabei das Verhältnis zwischen dem Partialdruck des Propylens und dem des weiteren Alk-1-ens auf 5:1 bis 500:1 einstellt, in der zweiten Polymerisationsstufe dem aus der ersten Polymerisationsstufe ausgebrachten Gemisch Propylen und weiteres Alk-1-en hinzupolymerisiert, dabei das Verhältnis der Partialdrücke zwischen Propylen und dem des weiteren Alk-1-ens auf 0,5:1 bis 20:1 einstellt und das Gewichtsverhältnis zwischen den in der ersten und den in der zweiten Polymerisationsstufe umgesetzten Monomeren so bemißt, daß es im Bereich von 0,5:1 bis 20:1 liegt.

**2.** Verfahren nach Anspruch 1, dadurch gekennzeichnet, daß man in der zweiten Polymerisationsstufe als Alk-1-en Ethylen verwendet.

**3.** Verfahren nach Anspruch 1, dadurch gekennzeichnet, daß man in der zweiten Polymerisationsstufe ein Gemisch aus Ethylen und einem $C_4$-$C_{10}$-Alk-1-en verwendet.

**4.** Verfahren nach den Ansprüchen 1 bis 3, dadurch gekennzeichnet, daß man die Polymerisation in der zweiten Polymerisationsstufe bei einer Temperatur von 70 bis 90 °C durchführt.

**5.** Verfahren zur Herstellung von Folien und Formkörpern, dadurch gekennzeichnet, daß man die aus den Ansprüchen 1 bis 4 erhaltenen Copolymerisate verwendet.

**Claims**

**Claims for the following Contracting States : AT, BE, DE, FR, GB, IT, NL**

**1.** A copolymer of propylene with an alk-1-ene, obtainable by the two-step polymerization from the gas phase in an agitated fixed bed, by means of a Ziegler-Natta catalyst system which contains a titanium-containing solid component and an aluminum compound, where

a) in the first polymerization step at from 15 to 40 bar and from 50 to 90 °C and a mean residence time of the reaction mixture of from 1 to 5 hours, propylene is polymerized together with a further alk-1-ene giving from 0.05 to 2 kg of propylene copolymer per mmol of the aluminum compound, the ratio between the partial pressure of the propylene and that of the further alk-1-ene being set at from 5:1 to 500:1, and subsequently,

b) in a second polymerization step at from 5 to 30 bar, this pressure being at least 7 bar below the pressure of the first polymerization step, and at from 30 to 100 °C and at a mean residence time of the reaction mixture of from 1 to 5 hours, propylene and the further alk-1-ene are polymerized onto the polymer discharged from the first polymerization step, the ratio between the partial pressure of the propylene and that of the further alk-1-ene being set at from 0.5:1 to 20:1, and the weight ratio between the monomers reacted in the first polymerization step and those reacted in the second step being in the range from 0.5:1 to 20:1.

**2.** A copolymer as claimed in claim 1, obtainable by a process in which the alk-1-ene used in the second polymerization step is ethylene.

**3.** A copolymer as claimed in claim 1, obtainable by a process in which the alk-1-ene used in the second polymerization step is a mixture of ethylene and $C_4$-$C_{10}$-alk-1-ene.

**4.** A copolymer as claimed in claim 1 or 2 or 3, obtainable by a process in which the polymerization in the second polymerization step is carried out in the presence of a $C_1$-$C_8$-alkanol.

**5.** A copolymer as claimed in claim 1 or 2 or 3 or 4, obtainable by a process in which the polymerization in the second polymerization step is carried out at from 70 to 90 °C.

6. A process for the preparation of a copolymer of propylene with an alk-1-ene as claimed in claim 1 or 2 or 3 or 4 or 5, where, from the gas phase in an agitated fixed bed by means of a Ziegler-Natta catalyst system which contains a titanium-containing solid component and an aluminum compound, from 0.05 to 2 kg of a propylene copolymer per mmol of the aluminum compound are first produced in a first polymerization step at from 15 to 40 bar, from 50 to 90 °C and at a mean residence time of the reaction mixture of from 1 to 5 hours, and, in a second polymerization step at from 5 to 30 bar, this pressure being at least 7 bar below the pressure of the first polymerization step, at from 30 to 100 °C and at a mean residence time of the reaction mixture of from 1 to 5 hours, a further alk-1-ene is polymerized onto the polymer discharged from the first polymerization step, which comprises, in the first polymerization step, polymerizing propylene together with a further alk-1-ene, the ratio between the partial pressure of the propylene and that of the further alk-1-ene being set at from 5:1 to 500:1, and, in the second polymerization step, polymerizing propylene and a further alk-1-ene onto the mixture discharged from the first polymerization step, the ratio between the partial pressure of propylene and that of the further alk-1-ene being set at from 0.5:1 to 20:1, and the weight ratio between the monomers reacted in the first polymerization step and those reacted in the second step being in the range from 0.5:1 to 20:1.

7. A film or molding made from a copolymer as claimed in claim 1 or 2 or 3 or 4 or 5.

**Claims for the following Contracting State : ES**

1. A process for the preparation of a copolymer of propylene with an alk-1-ene, where, from the gas phase in an agitated fixed bed by means of a Ziegler-Natta catalyst system which contains a titanium-containing solid component and an aluminum compound, from 0.05 to 2 kg of a propylene copolymer per mmol of the aluminum compound are first produced in a first polymerization step at from 15 to 40 bar, from 50 to 90 °C and at a mean residence time of the reaction mixture of from 1 to 5 hours, and, in a second polymerization step at from 5 to 30 bar, this pressure being at least 7 bar below the pressure of the first polymerization step, at from 30 to 100 °C and at a mean residence time of the reaction mixture of from 1 to 5 hours, a further alk-1-ene is polymerized onto the polymer discharged from the first polymerization step, which comprises, in the first polymerization step, polymerizing propylene together with a further alk-1-ene, the ratio between the partial pressure of the propylene and that of the further alk-1-ene being set at from 5:1 to 500:1, and, in the second polymerisation step, polymerizing propylene and a further alk-1-ene onto the mixture discharged from the first polymerization step, the ratio between the partial pressure of propylene and that of the further alk-1-ene being set at from 0.5:1 to 20:1, and the weight ratio between the monomers reacted in the first polymerization step and those reacted in the second step being in the range from 0.5:1 to 20:1.

2. A process as claimed in claim 1, wherein the alk-1-ene used in the second polymerization step is ethylene.

3. A process as claimed in claim 1, wherein a mixture of ethylene and $C_4$-$C_{10}$-alk-1-ene is used in the second polymerization step.

4. A process as claimed in claim 1 or 2 or 3, wherein the polymerization in the second polymerization step is carried out at from 70 to 90 °C.

5. A process for the production of a film or molding, which comprises using a copolymer obtained from claim 1 or 2 or 3 or 4.

**Revendications**

**Revendications pour les Etats contractants suivants : AT, BE, DE, FR, GB, IT, NL**

1. Copolymères du propylène avec des alcènes-1, obtenus par polymérisation en deux étapes en phase gazeuse dans un lit fixe en mouvement, au moyen d'un système catalytique de Ziegler-Natta qui contient, en dehors d'un composant solide contenant du titane, un composé de l'aluminium, en procédant de la manière suivante:

a) dans la première étape de polymérisation, on polymérise du propylène en même temps qu'un autre alcène-1 sous une pression de 15 à 40 bar, à une température de 50 à 90 °C et avec une

durée moyenne de séjour du mélange réactionnel de 1 à 5 h, de 0,05 à 2 kg de copolymère de propylène étant produits par mmole du composé de l'aluminium et le rapport entre la pression partielle du propylène et celle de l'autre alcène-1 étant réglé à une valeur comprise entre 5:1 et 500:1, puis

b) dans une seconde étape de polymérisation, on polymérise, par addition, du propylène et de l'autre alcène-1 sur le polymère issu de la première étape de polymérisation, sous une pression de 5 à 30 bar, cette pression étant inférieure d'au moins 7 bar à la pression de la première étape de polymérisation, à une température de 30 à 100 °C et avec une durée moyenne de séjour du mélange réactionnel de 1 à 5 h, le rapport des pressions partielles entre le propylène et l'autre alcène-1 étant réglé à une valeur comprise entre 0,5:1 et 20:1 et le rapport pondéral entre les monomères mis en réaction dans la première étape de polymérisation et dans la seconde étant fixé de sorte qu'il se situe dans la gamme de 0,5:1 à 20:1.

**2.** Copolymères selon la revendication 1, obtenus par un procédé dans lequel on utilise, dans la seconde étape de polymérisation, de l'éthylène en tant qu'alcène-1.

**3.** Copolymères selon la revendication 1, obtenus par un procédé dans lequel on utilise, dans la seconde étape de polymérisation, un mélange d'éthylène et d'un alcène-1 en $C_4$-$C_{10}$ en tant qu'alcène-1.

**4.** Copolymères selon l'une quelconque des revendications 1 à 3, obtenus par un procédé dans lequel on procède à la polymérisation, dans la seconde étape de polymérisation, en présence d'un alcanol en $C_1$-$C_8$.

**5.** Copolymères selon l'une quelconque des revendications 1 à 4, obtenus par un procédé dans lequel on conduit la polymérisation, dans la seconde étape de polymérisation, à une température de 70 à 90 °C.

**6.** Procédé de préparation de copolymères du propylène avec des alcènes-1 selon les revendications 1 à 5, dans lequel on produit en phase gazeuse dans un lit fixe en mouvement, au moyen d'un système catalytique de Ziegler-Natta qui contient, outre un composant solide contenant du titane, un composé de l'aluminium, tout d'abord 0,05 à 2 kg d'un copolymère de propylène par mmole du composé de l'aluminium, dans une première étape de polymérisation sous une pression de 15 à 40 bar, à une température de 50 à 90 °C et avec une durée moyenne de séjour du mélange réactionnel de 1 à 5 h et, dans une seconde étape de polymérisation sous une pression de 5 à 30 bar, cette pression étant inférieure d'au moins 7 bar à la pression de la première étape de polymérisation, à une température de 30 à 100 °C et avec une durée moyenne de séjour du mélange réactionnel de 1 à 5 h, on polymérise, par addition, de l'autre alcène-1 sur le polymère issu de la première étape de polymérisation, caractérisé en ce que, dans la première étape de polymérisation, on polymérise du propylène en même temps qu'un autre alcène-1, le rapport entre la pression partielle du propylène et celle de l'autre alcène-1 étant réglé à une valeur comprise entre 5:1 et 500:1, et on polymérise, par addition, dans la seconde étape de polymérisation, du propylène et de l'autre alcène-1 sur le mélange issu de la première étape de polymérisation, le rapport des pressions partielles entre le propylène et l'autre alcène-1 étant réglé à une valeur comprise entre 0,5:1 et 20:1, et le rapport pondéral entre les monomères mis en réaction dans la première étape de polymérisation et dans la seconde étant fixé de sorte qu'il se situe dans la gamme de 0,5:1 à 20:1.

**7.** Feuilles minces et corps moulés, fabriqués avec les copolymères selon l'une quelconque des revendications 1 à 5.

**Revendications pour l'Etat contractant suivant : ES**

**1.** Procédé de préparation de copolymères du propylène avec des alcènes-1, dans lequel on produit en phase gazeuse dans un lit fixe en mouvement, au moyen d'un système catalytique de Ziegler-Natta qui contient, outre un composant solide contenant du titane, un composé de l'aluminium, tout d'abord 0,05 à 2 kg d'un copolymère de propylène par mmole du composé de l'aluminium, dans une première étape de polymérisation sous une pression de 15 à 40 bar, à une température de 50 à 90 °C et avec une durée moyenne de séjour du mélange réactionnel de 1 à 5 h et, dans une seconde étape de polymérisation sous une pression de 5 à 30 bar, cette pression étant inférieure d'au moins 7 bar à la pression de la première étape de polymérisation, à une température de 30 à 100 °C et avec une durée

moyenne de séjour du mélange réactionnel de 1 à 5 h, on polymérise, par addition, l'autre alcène-1 sur le polymère issu de la première étape de polymérisation, caractérisé en ce que, dans la première étape de polymérisation, on polymérise du propylène en même temps qu'un autre alcène-1, le rapport entre la pression partielle du propylène et celle de l'autre alcène-1 étant réglé à une valeur comprise entre 5:1 et 500:1, et on polymérise par addition, dans la seconde étape de polymérisation, du propylène et de l'autre alcène-1 sur le mélange issu de la première étape de polymérisation, le rapport des pressions partielles entre le propylène et l'autre alcène-1 étant réglé à une valeur comprise entre 0,5:1 et 20:1, et le rapport pondéral entre les monomères mis en réaction dans la première étape de polymérisation et dans la seconde étant fixé de sorte qu'il se situe dans la gamme de 0,5:1 à 20:1.

**2.** Procédé selon la revendication 1, caractérisé en ce qu'on utilise, dans la seconde étape de polymérisation, de l'éthylène en tant qu'alcène-1.

**3.** Procédé selon la revendication 1, caractérisé en ce qu'on utilise, dans la seconde étape de polymérisation, un mélange d'éthylène et d'un alcène-1 en $C_4$-$C_{10}$.

**4.** Procédé selon l'une quelconque des revendications 1 à 3, caractérisé en ce qu'on conduit la polymérisation, dans la seconde étape de polymérisation, à une température de 70 à 90 °C.

**5.** Procédé de fabrication de feuilles minces et de corps moulés, caractérisé en ce qu'on utilise les copolymères obtenus d'après les revendications 1 à 4.